# EUROPÄISCHE PATENTSCHRIFT

(11) **EP 1 199 330 B1**
(45) Veröffentlichungstag und Bekanntmachung des Hinweises auf die Patenterteilung: **04.04.2007**
(21) Anmeldenummer: 01124505.7
(22) Anmeldetag: 12.10.2001
(51) Int. Cl.: C08J 9/224, C04B 20/12

(54) **Polymerschaumgranulat, dessen Herstellung und dessen Verwendung**
Granule of foamed polymer, preparation and use thereof
Granulé de polymère expansé, sa fabrication et son utilisation

(30) Priorität: 19.10.2000 DE 10052117
(43) Veröffentlichungstag der Anmeldung: 24.04.2002
(73) Patentinhaber: Michel, Erich, Dr., 45721 Haltern (DE); Baumgarten, Marlene, 31303 Burgdorf (DE)
(72) Erfinder: Michel, Erich Dr., 45721 Haltern (DE)
(74) Vertreter: Einsel, Martin

(56) Entgegenhaltungen:
- FR-A- 2 324 589
- GB-A- 1 114 133

## Beschreibung

Von den mit leichtgewichtigen Zuschlagstoffen wie Bims, Blähton und dergleichen hergestellten Leichtbetonen besitzt der Polymerschaumbeton, der Polymerschaumgranulate, insbesondere Polystyrolschaumgranulat als Zuschlagstoff enthält, ein besonders niedriges Raumgewicht und ein wirkungsvolles Wärmedämmvermögen.

Daß sich durch Verwendung von Polymerschäumen beachtliche Dämmpotentiale realisieren lassen, zeigt die Verwendung von Platten verschiedenster Schäume, insbesondere aber auch von Polystyrolschaumplatten zur Dämmung von Dächern, zur Estrichdämmung im Wohnungsbau oder zur Außendämmung von Gebäuden. Der Brandschutz lässt hier noch Anpassungen vermissen, die auch bei Reparaturarbeiten ein unbeabsichtigtes Zünden von Dämmstoffen aus Polymerschäumen verhindern. Dadurch können schwerkontrollierbare Brandherde entstehen, wie Großbrände der letzten Jahre gezeigt haben. Aber auch beachtliche Defekte der angestrebten Wärme- und Schalldämmung werden bei wenig sorgfältiger Verlegung von Dämmplatten beobachtet, die automatisch vermieden werden, wenn die Dämmschicht vor Ort monolithisch vergossen eingebracht werden kann.

Unbehandelte Polymerschaumgranulate sind wenig handhabungsfreundlich und aufgrund ihres geringen Gewichts, ihrer hydrophoben Oberfläche und ihrer Neigung zur statischen Aufladung nicht offen, sondern nur unter besonderen Bedingungen lagerfähig, ganz abgesehen von dem erheblichen Brandpotential, das eine größere Lagermenge repräsentiert. Außerdem lassen sich unbehandelte Granulate nur sehr schwierig mit homogener Verteilung in hydraulische Bindemittel einmischen. All dies hat zur Folge, daß die Herstellung von Polymerschaumbeton, insbesondere Polystyrolschaumbeton, vor Ort kaum oder nur unter Einhaltung besonderer Rahmenbedingungen möglich ist. So hilft man sich in Ausnahmefällen in der Weise, daß die Styroporschaumgranulate mit Netzmittel besprüht und angefeuchtet in luftdicht verschlossene Säcke verpackt mit Datum der Granulat-Konditionierung auf der Baustelle angeliefert werden. Sie entsprechen nur in einer begrenzten Lagerzeit den Bedingungen der geforderten Brandklasse B 2.

FR 2324589 beschreibt Styroporkugeln, die mit einem ersten überzug aus einem Bindemittelklebstoff auf Acrylatharzbasis versehen sind, wobei an diesem ersten Überzug eine weitere Schicht aus einem pulverförmigen Material angeklebt ist.

GB 1114133 beschreibt Dispersionen mit Acrylatpolymerpartikeln für die Herstellung von Überzügen. Ein Hinweis auf eine mögliche Eignung als Lack findet sich nicht.

Hier setzt nun die Erfindung ein. Sie hat zur Aufgabe, ein handhabungsfreundliches Polymerschaumgranulat zur Verfügung zu stellen, das sehr gut vor Ort auf der Baustelle als Betonzuschlag verarbeitet werden kann, offen in einfachen Silos lagerfähig ist, ein bis auf Null reduziertes Brandpotential besitzt und zudem die Wiederverwendung eines sonst als Abfall zu entsorgenden Materials erlaubt.

Diese Aufgabe wird dadurch gelöst, daß die Granulat-Partikel mit einem Überzug aus einem feinteiligen Koagulat eines Acrylharzlackes versehen und vorzugsweise mit einer Schicht eines hydraulischen Bindemittels ummantelt werden, wobei die Acrylharzkomponente die Biegezugfestigkeit beeinflußt und die Bildung eines wirksamen Bindemittelüberzugs unterstützt.

Zur Herstellung dieses Überzugs werden die Granulat-Partikel zunächst mit einer wässrigen Dispersion eines Koagulats eines hochgefüllten feinteiligen Acrylharzlackes behandelt. Die Dispersion kann noch ein Netzmittel enthalten, und die Acrylharzlackteilchen sollten eine Korngröße von weniger als 10 µm besitzen, weil dies sowohl in der Verteilung auf den Oberflächen der Granulate als auch in der Wirkung den optimalsten Effekt ergibt. Vorzugsweise werden als Koagulate von Acrylharzlack die Koagulate von Automobillacken eingesetzt, die in der Automobilindustrie als Abfallprodukt anfallen und durch Feinmahlung auf die gewünschte Kornfeinheit gebracht werden können.

Die Granulat-Partikel erfahren durch diese Behandlung eine erste Beschwerung und erhalten eine hydrophile Oberfläche, was dazu führt, daß die Neigung zur statischen Aufladung verschwindet. Dadurch können die Granulate offen wie normales Schüttgut behandelt werden, ohne daß besondere Silos vorhanden sein müssen oder die Gefahr besteht, daß die Partikel sich aufgrund ihrer statischen Aufladung im Raum verteilen.

Das Granulat ist, sobald die Partikel abgetrocknet sind, allerdings noch brennbar. Um dies zu beseitigen, werden die Partikel im noch feuchten oder wieder angefeuchteten Zustand mit einem hydraulischen Bindemittel in Staubform abgepudert. Nach dem Aushärten des Bindemittels sind sie dann zusätzlich mit einer durchgehenden festhaftenden Bindemittelschicht überzogen, wodurch zwar eine weitere Beschwerung der Partikel ensteht, zugleich aber auch der Vorteil eintritt, daß das Material nicht mehr zündfähig ist. Außerdem erhöht sich durch diesen Bindemittel-Überzug die Affinität der Partikel zu hydraulischen Bindemitteln ganz beträchtlich.

Das erfindungsgemäße Polymerschaumgranulat kann vielfältige Verwendung finden. So kann es beispielsweise auf der Baustelle als Betonzuschlag eingesetzt werden, wobei es sich ebenso handhaben und lagern läßt wie die bei Schwerbeton üblichen Zuschläge Kies, Splitt oder Sand. Dies eröffnet die für den Handwerksbetrieb oder den Heimwerker besonders interessante Möglichkeit, auch kleine Mengen an Leichtbeton bereitstellen zu können und nicht mehr auf Lieferungen aus Mischanlagen angewiesen zu sein. Ebenso ist das erfindungsgemäße Granulat aber auch als lose oder locker gebundene Schüttdämmung einsetzbar, wobei es den Wärmeschutz mit einem wirksamen Brandschutz verbindet.

Ein sehr vorteilhafter weiterer Aspekt der Erfindung besteht darin, daß ein bisher im wesentlichen als Abfallprodukt angesehenes Material, nämlich Lackkoagulate, einer sinnvollen höherwertigeren Verwendung zugeführt wird. Die Lackkoagulate fallen beispielsweise an beim Abscheiden des in Lackieranlagen entstehenden, sogenannten "Overspray". Das ist die Lackmenge, die beim Spritzlackieren am Werkstück vorbei geht und auf Wasserfilmen in den Spritzkabinen abgeschieden wird. Diese Lackpartikel werden durch Zusatz von Koagulations- und Flockungsmitteln vom Wasser getrennt und stehen normalerweise mit stark wechselnden Wassergehalten - die Gehalte an Trockensubstanz schwanken typischerweise zwischen 35 und 75 % - zur Entsorgung an.

Die zum erfindungsgemäßen Einsatz verwendeten Lackkoagulate sind ausschließlich Koagulate wasserlöslicher Lacke. Dabei eignen sich vor allem Lackkoagulate, die bei Lackiervorgängen mit hochgefüllten Acrylharzlacken abgeschieden werden, wie sie vornehmlich in der Automobilindustrie angewandt werden. Es ist ohne Bedeutung, ob das Koagulat aus einer nicht farbbelasteten Decklack-Verarbeltung oder aus einer farbbelasteten Base-Coat-Lackiererei stammt. Der Einsatz farbbelasteter Lackkoagulate - die Mischfarbe aus einer Vielzahl von Farben ist stets ein in seiner Helligkeit schwankender Grauton - hat sogar den Vorteil, daß man die Güte der Verteilung auf der Granulatoberfläche mit bloßem Auge erkennen kann. Im übrigen ist es zweckmäßig, Koagulate aus gleichbleibenden Quellen zu benutzen, um hinsichtlich der Harzgrundlage und der Abscheidungsrezeptur definierte Bedingungen zu haben.

Die Erfindung wird nachfolgend anhand von Ausführungsbeispielen näher erläutert.

### Beispiel 1: Herstellung einer Acrylharzlack-Dispersion

100 Gewichtsteile Lackkoagulat aus einer Acrylharzlackiererei der Automobilindustrie mit einem Gehalt an Trockensubstanz von 50-60 % werden mit 2,7 Gewichtsteilen Calciumoxid-Monohydrat, 26 Gewichtsteilen Wasser und 1,3 Gewichtsteilen eines nicht ionogenen, lösungsmittelfreien Netzmittels versetzt und in einer zweistufigen Mahlanordnung solange gemahlen, bis eine homogene und stabile Dispersion entstanden und ein Kornmaximum (bestimmt durch Laser-Streulichtmessung) von 6 µm erreicht worden ist.

### Beispiel 2: Konditionierung von Polystyrolschaumgranulat

100 Volumenteile Polystyrolschaumgranulat (Körnung im Bereich von 2-7 mm) werden in einem Mischer mit mindestens 5 Gewichtsteilen der Dispersion gemäß Beispiel 1 versetzt. Die Dispersion zieht während des Mischvorgangs nahezu spontan auf und färbt die in der Regel weißen Granulatkörner dunkelgrau ein. Die Neigung zur statischen Aufladung verschwindet mit dem Aufbringen der Dispersion, so daß die beschichteten Granulate dann sofort offen handelbar sind und wie Schüttgut gelagert werden können. Die Granulate sind natürlich noch oberflächenfeucht, neigen jedoch nicht zum Verklumpen, sind aber nach dem Abtrocknen noch leicht brennbar.

Vor dem Aufbringen einer durchgehenden Bindemittelbeschichtung werden dem Granulat vor allem zur gleichmäßigen Verteilung der noch vorhandenen Feuchte 0,5 Volumen-Teile der wässrigen Lösung eines Haftvermittlers und 0,5 Volumen-Telle einer 30%-igen CaCl₂-Lösung zugesetzt. Anschließend wird das Granulat mit 7 Gewichtsteilen eines handelsüblichen Zements abgepudert. Nach dem Aushärten des Zements ist das Granulat nicht mehr zündfähig und, sobald es aus dem Bereich einer Zündquelle entfernt wird, selbstverlöschend. Das Schüttgewicht des Granulats wird durch diese Behandlung um etwa das 10-fache erhöht und beträgt ca. 150 g/l. Das Granulat kann auf Baustellen ohne Einschränkungen als Zuschlagstoff, wie Sand oder Kies bei Schwerbeton, verwendet werden.

### Beispiel 3: Herstellung eines Dämm-Materials

Das gemäß Beispiel 2 mit mindestens 5 Gewichtteilen Dispersion pro 100 Volumenteilen konditionierte Polymerschaumgranulat wird sofort zum fertigen einbaufähigen Dämmaterialgemisch weiter verarbeitet. Dazu werden dem Granulat Wasser zugesetzt, bis unter Berücksichtigung der mit der Dispersion eingetragenen Wassermenge ein Wasser-Zement-Verhältnis von 0,45 bis 0,68 erreicht ist, sowie gegebenenfalls wässrige Haftvermittler-Lösung und CaCl₂-Lauge. Daran anschließend werden die Bindemittelmengen entsprechend der angestrebten Festigkeit eingemischt. Das Einmischen der Dispersion und des Bindemittels geschieht in zwei hintereinander geschalteten Mischeinrichtungen, und die fertige Mischung wird dann sofort zur Einbaustelle gefördert.

## Patentansprüche

1. Polymerschaumgranulat, insbesondere Polystyrolschaumgranulat, **dadurch gekennzeichnet, daß** die Granulat-Partikel mit einem Überzug aus einem feinteiligen Koagulat eines Acrylharzlackes versehen sind.

2. Polymerschaumgranulat nach Anspruch 1, **dadurch gekennzeichnet, daß** der Überzug aus einem Koagulat eines Acrylharzlackes noch mit einer Schicht eines abgebundenen hydraulischen Bindemittels überzogen ist.

3. Verfahren zur Herstellung eines Polymerschaumgranulats nach Anspruch 1 oder 2, **dadurch gekennzeichnet, daß** die Granulat-Partikel mit einer wässrigen Dispersion eines Koagulat eines Acrylharzlackes behandelt werden, wobei die Dispersion mit einem Netzmittel versetzt wird und die Koagulat-Teilchen mit einer maximalen Korngröße von weniger als 10 µm eingesetzt werden.

4. Verfahren nach Anspruch 3, **dadurch gekennzeichnet, daß** die mit der Dispersion eines Koagulat eines Acrylharzlackes behandelten Granulat-Partikel im noch feuchten oder im angefeuchteten Zustand mit einem hydraulischen Bindemittel in Staubform abgepudert werden.

5. Verwendung des Polymerschaumgranulats gemäß Anspruch 1 und 2 bzw. des gemäß Ansprüchen 3 und 4 hergestellten Granulats vor Ort auf der Baustelle als Betonzuschlag.

6. Verwendung des Polymerschaumgranulats gemäß Anspruch 1 und 2 bzw. des gemäß Ansprüchen 3 und 4 hergestellten Granulats als lose bzw. locker gebundene Schüttdämmung.

## Claims

1. Polymer foam granulate, in particular polystyrene foam granulate, **characterised in that** the granulate particles are provided with a coating composed of a fine-grained coagulate of an acrylic resin varnish.

2. Polymer foam granulate according to Claim 1, **characterised in that** the coating composed of a coagulate of an acrylic resin varnish is further coated with a layer of a cured hydraulic binder.

3. Method for the production of a polymer foam granulate according to Claim 1 or 2, **characterised in that** the granulate particles are treated with an aqueous dispersion of a coagulate of an acrylic resin varnish, wherein the dispersion is mixed with a wetting agent and the coagulate particles are used with a maximum grain size of less than 10 µm.

4. Method according to Claim 3, **characterised in that** the granulate particles treated with the dispersion of a coagulate of an acrylic resin varnish are powder-coated with a hydraulic binder in powder form when still moist or in moistened state.

5. Use of the polymer foam granulate according to Claim 1 and 2 or of the granulate produced according to Claims 3 and 4 in situ on the building site as concrete aggregate.

6. Use of the polymer foam granulate according to Claim 1 and 2 or of the granulate produced according to Claims 3 and 4 as loose or loosely bound bulk insulation.

## Revendications

1. Granulé de polymère expansé, en particulier granulé de polystyrène expansé, **caractérisé en ce que** les particules de granulé sont munies d'un revêtement formé d'un coagulat en forme de fines particules d'une laque de résine acrylique.

2. Granulé de polymère expansé selon la revendication 1, **caractérisé en ce que** le revêtement formé d'un coagulat d'une laque de résine acrylique est encore recouvert d'une couche d'un agent liant hydraulique durci.

3. Procédé de fabrication d'un granulat de polymère expansé selon la revendication 1 ou 2, **caractérisé en ce que** les particules de granulé sont traitées avec une dispersion aqueuse d'un coagulat d'une laque de résine acrylique, la dispersion étant mélangée avec un agent mouillant et les particules de coagulat étant mises en oeuvre avec une grosseur maximale de grains inférieure à 10 µm.

4. Procédé selon la revendication 3, **caractérisé en ce que** les particules de granulé traitées avec la dispersion d'un coagulat d'une laque de résine acrylique à l'état encore humide ou humidifié sont empoudrées avec un agent liant hydraulique sous forme de poudre fine.

5. Utilisation du granulé de polymère expansé selon les revendications 1 et 2 et/ou du granulé fabriqué selon les revendications 3 et 4 comme additif pour le béton directement sur chantier.

6. Utilisation du granulé de polymère expansé selon les revendications 1 et 2 et/ou du granulé fabriqué selon les revendications 3 et 4 comme isolant pulvérulent non pris et/ou pris de manière légère.
